# EUROPEAN PATENT APPLICATION

(11) **EP 1 944 531 A2**
(43) Date of publication of application: **16.07.2008**
(21) Application number: 08250147.9
(22) Date of filing: 11.01.2008
(51) Int. Cl.: F16H 61/662

(54) **Belt type continuously variable transmission**

(30) Priority: 15.01.2007 JP 2007005671
(71) Applicant: Yamaha Hatsudoki Kabushiki Kaisha, Iwata-shi, Shizuoka 438-8501 (JP)
(72) Inventor: Sakaue, Masaya, Iwata-Shi Shizuoka-ken 438-8501 (JP)
(74) Representative: Lamb, Martin John Carstairs

(57) **Abstract**

A belt type continuously variable transmission (800) includes a primary sheave (13) and a secondary sheave (14) each having a pair of flanges axially movable relative to each other, a belt (15) wound around both the sheaves, an actuator (17) for moving the flange, and a control device (18) for controlling the actuator (17). The control device (18) includes a determination section (206) for determining whether or not the actual gear ratio of the belt type continuously variable transmission (800) has become a predetermined gear ratio for a TOP or LOW gear setting determined in advance, and a first correction section (207) for correcting an operation amount of the actuator (17) based on the determination made by the determination section (206).

## Description

### FIELD OF THE INVENTION

The present invention relates to a belt type continuously variable transmission and a control device for a belt type continuously variable transmission.

### BACKGROUND TO THE INVENTION

Conventional belt type continuously variable transmissions include a pair of a primary sheave and a secondary sheave each with a groove having a variable width and respectively mounted on a primary shaft to which an output from a power source, such as an engine, is input, and a secondary shaft from which an output for a driving wheel is output. In general, the primary sheave and the secondary sheave are each made up of a fixed flange and a movable flange defining a V-groove therebetween. Each movable flange is provided so as to be movable in the axial direction of the primary shaft or the secondary shaft. A V-belt is wound around both the sheaves. The gear ratio of the belt type continuously variable transmission is varied by moving the movable flange to vary the groove widths of both the sheaves.

Some V-belt type continuously variable transmissions include a control device for controlling an actuator for moving the movable flange of the primary sheave. The control device calculates a target gear ratio based on vehicle information, such as throttle opening degree, vehicle speed, for example. In order to move the movable flange to a target position, the control device sends a control signal to the actuator to control the position of the movable flange based on the control signal. Such V-belt type automatic continuously variable transmissions are applied, for example, to vehicles such as motorcycles. An example is provided in JP-B-3043061.

The belt type continuously variable transmission in, for example, JP-A-Hei 7-158706 includes a position sensor for detecting the position of the movable flange. This publication discloses that factors such as variations in the output characteristics of the position sensor, changes over time in the characteristics, and elongation and wear of the V-belt impair the consistency of the correlation between the value detected by the position sensor and the position of the movable flange. This publication further discloses self-correction of data of the impaired consistency of the correlation based on the ratio between the speeds of the primary sheave and the secondary sheave.

The transmission control method disclosed in JP-A-Hei 7-158706, however, requires complicated processes such as determination of the presence/absence of a slip of the belt, calculation of an input torque, and so forth.

Various control methods with less variations in the correlation described above among vehicles and with less influence of such variations on the control have been conceived. For example, the correlation can be corrected by performing measurement over the entire movable range of the movable flange. Such correction needs to be made for each vehicle, and cannot treat changes over time. Another method is to calculate an actual gear ratio and use the calculation results as feedback in order to control the gear ratio of the belt type continuously variable transmission. In this method, however, the gearshift response of the vehicle is considered to be worsened. Therefore, the control accuracy is desirably improved in an easier way.

### SUMMARY OF THE INVENTION

In the belt type continuously variable transmission in accordance with the present invention, a belt is wound around a primary sheave and a secondary sheave each having a pair of flanges axially movable relative to each other. The belt type continuously variable transmission includes: an actuator for moving the flange; and a control device for controlling the actuator. The control device includes: a determination section for determining whether or not an actual gear ratio of the belt type continuously variable transmission has become a predetermined gear ratio for TOP or LOW determined in advance; and a first correction section for correcting an operation amount of the actuator based on the determination made by the determination section.

In an embodiment, the determination section determines whether or not the actual gear ratio of the belt type continuously variable transmission has become the predetermined gear ratio for TOP. In a case where the determination section determines that the actual gear ratio has become the predetermined gear ratio for TOP before completion of control to move the flange to a target position where a gear ratio of the belt type continuously variable transmission would become TOP, the first correction section may correct the operation amount of the actuator set by the control device such that the actual gear ratio will not become any smaller.

In another embodiment, in a case where the determination section does not determine that the actual gear ratio has become the predetermined gear ratio for TOP even after completion of control to move the flange to a target position where a gear ratio of the belt type continuously variable transmission would become TOP, the first correction section may correct the operation amount of the actuator set by the control device such that the actual gear ratio will become the predetermined gear ratio for TOP. In this case, the first correction section may correct the operation amount of the actuator set by the control device such that the actual gear ratio will become smaller according to an increase of a vehicle speed.

The primary sheave and the secondary sheave may each include a fixed flange and a movable flange respectively mounted on a rotary shaft; and a width of a groove of the primary sheave may be adjusted by moving the movable flange of the primary sheave with the actuator, and the movable flange of the secondary sheave may be urged in a direction of reducing a width of a groove of the secondary sheave.

The belt type continuously variable transmission may include a flange position detection sensor for detecting a position of the flange. In this case, the control device may include: a target gear ratio setting section for setting a target gear ratio; a first storage section for storing correlation between a detection value of the flange position detection sensor and the gear ratio; and an operation amount setting section for setting the operation amount of the actuator based on information including the correlation stored in the first storage section such that the gear ratio of the belt type continuously variable transmission will become the target gear ratio set by the target gear ratio setting section.

The control device may additionally include: a second storage section for storing the predetermined gear ratio for TOP or LOW; and an actual gear ratio detection section for detecting the actual gear ratio of the belt type continuously variable transmission. In this case, the determination section may determine whether or not the actual gear ratio detected by the actual gear ratio detection section has become the predetermined gear ratio for TOP or LOW based on the predetermined gear ratio for TOP or LOW stored in the second storage section; and the first correction section may correct the operation amount of the actuator set by the operation amount setting section based on the determination made by the determination section.

The flange position detection sensor may be an angle sensor mounted on a rotary shaft for rotation in conjunction with a mechanism for moving the flange.

The flange position detection sensor may be a sensor of which reference is set to a first state where the flange is positioned on one side of its movable range, and of which detection value changes according to an amount of movement of the flange toward a second state where the flange is positioned on the other side of the movable range. The first storage section may store reference correlation between the detection value of the flange position detection sensor and the gear ratio. In this case, the control device may include a second correction section for correcting the reference correlation stored in the first storage section based on a ratio of ΔA/ΔB in a state closer to the second state, ΔA being a change amount of the detection value of the flange position detection sensor at a time when the actual gear ratio has become a predetermined gear ratio, and ΔB being a change amount of the detection value of the flange position detection sensor derived based on the reference correlation stored in the first storage section.

The first state may be on a side where the gear ratio of the belt type continuously variable transmission is LOW, or a side where the gear ratio thereof is TOP.

The actual gear ratio detection section may calculate the actual gear ratio of the belt type continuously variable transmission based on a ratio between an input speed to the belt type continuously variable transmission and an output speed from the belt type continuously variable transmission.

Aspects of the present invention are set forth in the independent claims.

Preferred but non-essential features of the present invention are set forth in the dependent claims.

According to the present invention, since the control device includes a determination section for determining whether or not the actual gear ratio of the belt type continuously variable transmission has become a predetermined gear ratio for TOP or LOW determined in advance, and a first correction section for correcting an operation amount of the actuator based on the determination made by the determination section, the control accuracy in the region where the gear ratio is TOP or LOW can be improved.

In addition, according to an embodiment of the present invention, since a second correction section for correcting the reference correlation stored in the first storage section based on a ratio of ΔA/ΔB is provided, the deviation in the correlation described above over the entire region of the gear ratio can be corrected easily. As a result, the control accuracy of the belt type continuously variable transmission can be improved in a relatively easy way.

### BRIEF DESCRIPTION OF THE DRAWINGS

These And other aspects and features of the invention will now be described, by way of example only, with reference to the accompanying drawings, in which:
FIG. 1 is a side view showing a motorcycle provided with a belt type continuously variable transmission in accordance with an embodiment of the present invention;
FIG. 2 is a schematic diagram of the belt type continuously variable transmission in accordance with the embodiment of the present invention;
FIG. 3 is a partial cross sectional view of the belt type continuously variable transmission in accordance with the embodiment of the present invention;
FIG. 4 is a partial cross sectional view of the belt type continuously variable transmission in accordance with the embodiment of the present invention;
FIG. 5 is a cross sectional view showing a primary sheave of the belt type continuously variable transmission in accordance with the embodiment of the present invention;
FIG. 6 shows the mounting structure of a potentiometer of the belt type continuously variable transmission in accordance with the embodiment of the present invention;
FIG. 7 is a gear ratio map of the belt type continuously variable transmission in accordance with the embodiment of the present invention;
FIG. 8 shows the correlation between the detection value of the potentiometer and the gear ratio of the belt type continuously variable transmission in accordance with the embodiment of the present invention;
FIG. 9 is a control flowchart of a control device of the belt type continuously variable transmission in accordance with the embodiment of the present invention;
FIG. 10 shows the correlation between the vehicle speed and the detection value of the potentiometer of the belt type continuously variable transmission in accordance with the embodiment of the present invention; and
FIG. 11 shows the correlation between the vehicle speed and the detection value of the potentiometer of the belt type continuously variable transmission in accordance with the embodiment of the present invention.

### DETAILED DESCRIPTION OF THE DRAWINGS

A description will hereinafter be made of a belt type continuously variable transmission in accordance with an embodiment of the present invention with reference to the drawings. In the drawings, the same reference numeral is given to members and parts having the same function. It should be understood that the present invention is not limited to the embodiment below.

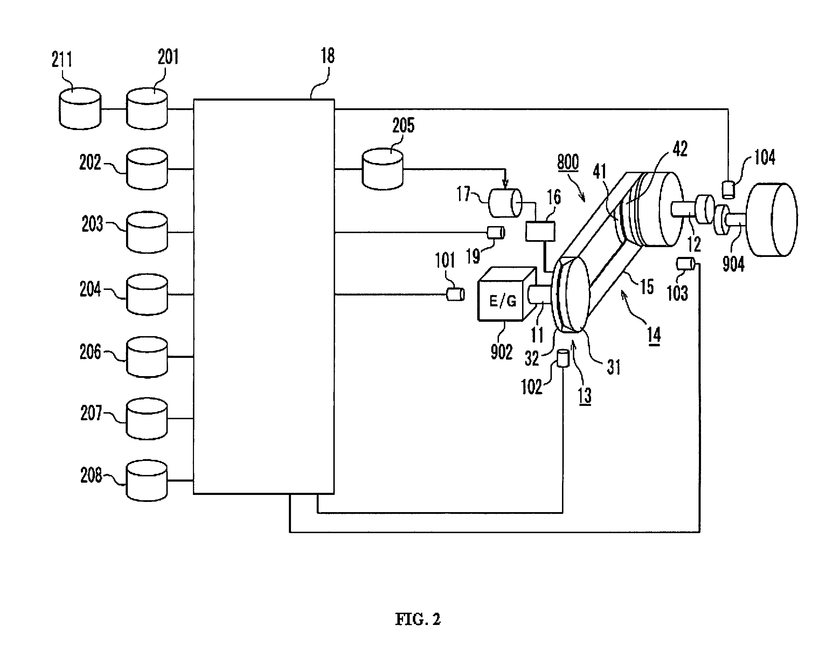

As shown in FIG. 2, a belt type continuously variable transmission 800 has a primary sheave 13 and a secondary sheave 14 each having a pair of flanges 31, 32, 41, 42 axially movable relative to each other, and a belt 15 wound around both the sheaves 13, 14. The belt type continuously variable transmission 800 includes an actuator 17 for moving the flanges 31, 32, 41, 42 and a control device 18 for controlling the actuator 17. Controlling the actuator 17 so as to move the flanges 31, 32, 41, 42 varies the groove width of both the sheaves 13, 14 in order to vary the gear ratio.

A flange position detection sensor 19 for detecting the position of the flange 32 of the primary sheave is connected to the control device 18. The flange position detection sensor 19 can also detect the operation amount of the actuator 17, in addition to detecting the position of the flange 32.

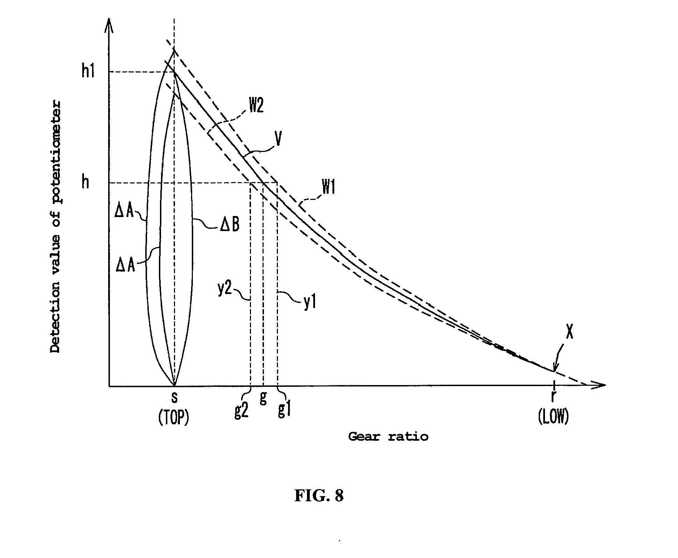

There is correlation between the detection value of the flange position detection sensor 19 and the gear ratio. For example, as shown in FIG. 8, reference correlation v can be set based on a sensor reference position in consideration of the design output characteristics of the flange position detection sensor 19 and so forth. In the example shown in FIG. 8, a potentiometer is used as the flange position detection sensor 19. In this example, the sensor reference position of the flange position detection sensor is set to the position where the gear ratio is LOW, and the detection value of the flange position detection sensor becomes larger as the gear ratio becomes closer to TOP.

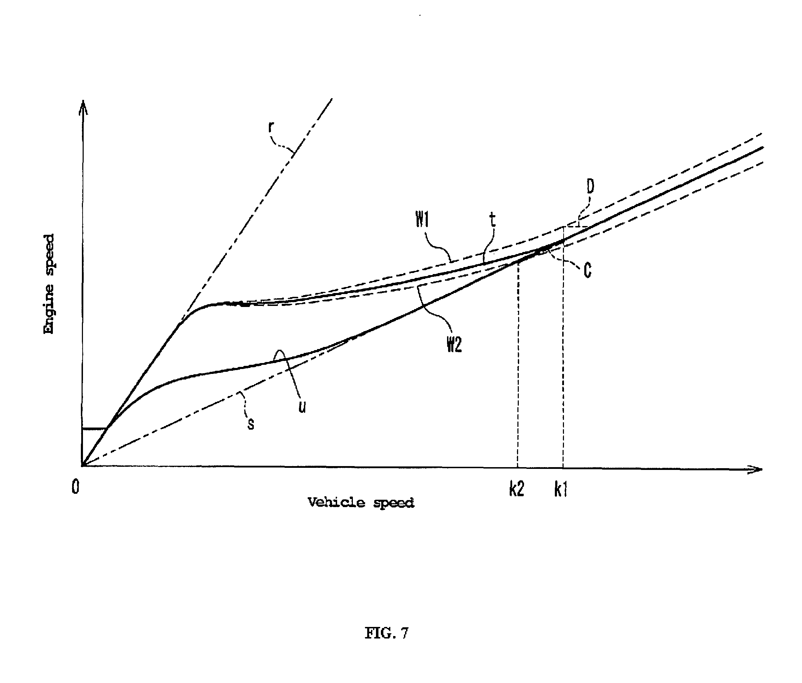

In general, however, there are individual differences in the output characteristics of the flange position detection sensor 19. Therefore, as shown in FIG. 8, the correlation between the detection value of the flange position detection sensor 19 and the gear ratio may be deviated from the reference correlation v to the LOW side (w1) or the TOP side (w2). In the case where the correlation between the detection value of the flange position detection sensor 19 and the gear ratio is deviated from the reference correlation v as described above, in controlling the gear ratio based on the detection value of the flange position detection sensor 19, the gear ratio may deviate from a target gear ratio as a control target as the flange moves away from the sensor reference position x. That is, as shown in FIG. 7, the gear ratio (w1, w2) to be actually achieved by the control deviates from the target gear ratio t.

In view of the above circumstances, the present inventors discussed the possibility of developing an easy method to improve the control accuracy. As a result, the present inventors thought it desirable to control the gear ratio to a predetermined gear ratio set in advance as accurately as possible at the position for TOP or LOW, which is distant from the sensor reference position and where the deviation in the correlation described above is larger. In addition, the present inventors have found that even in the case where the deviation in the correlation described above has led to the deviation of the gear ratio from the target gear ratio, the influence of the deviation of the gear ratio from the target gear ratio is tolerated in the middle region between the TOP region and the LOW region.

The present inventors have also found a method to improve the control accuracy in the region where the gear ratio is TOP or LOW. The present inventors have further found an easy method to correct the deviation in the correlation described above over the entire region of the gear ratio. The following describes an embodiment of the present invention in detail.

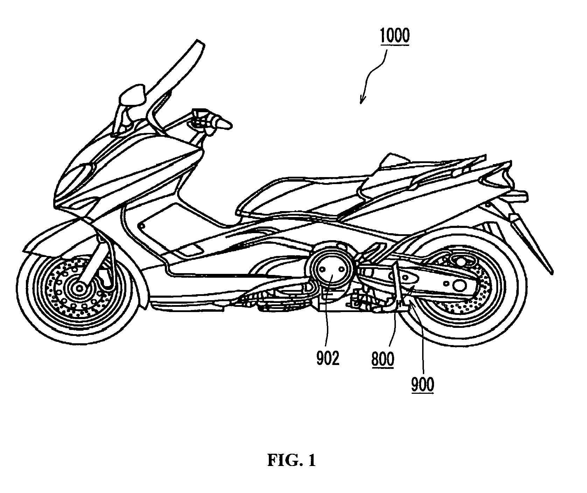

In this embodiment, as shown in FIG. 1, a belt type continuously variable transmission 800 is provided to a power unit 900 of a motorcycle 1000.

In this embodiment, as shown in FIG. 2, the belt type continuously variable transmission 800 includes a primary shaft 11, a secondary shaft 12, a primary sheave 13, a secondary sheave 14, a V-belt 15, a groove width adjustment mechanism 16, an actuator 17, a control device 18, and a flange position detection sensor 19.

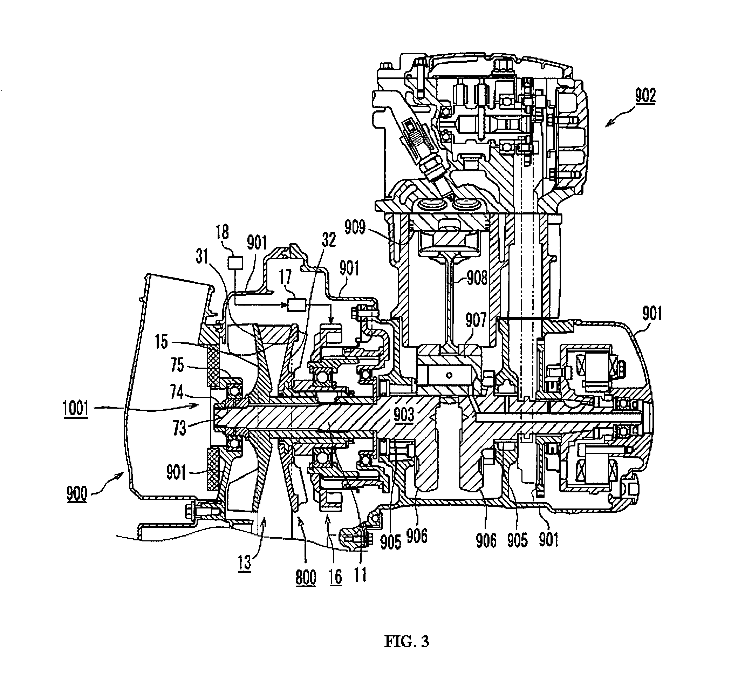

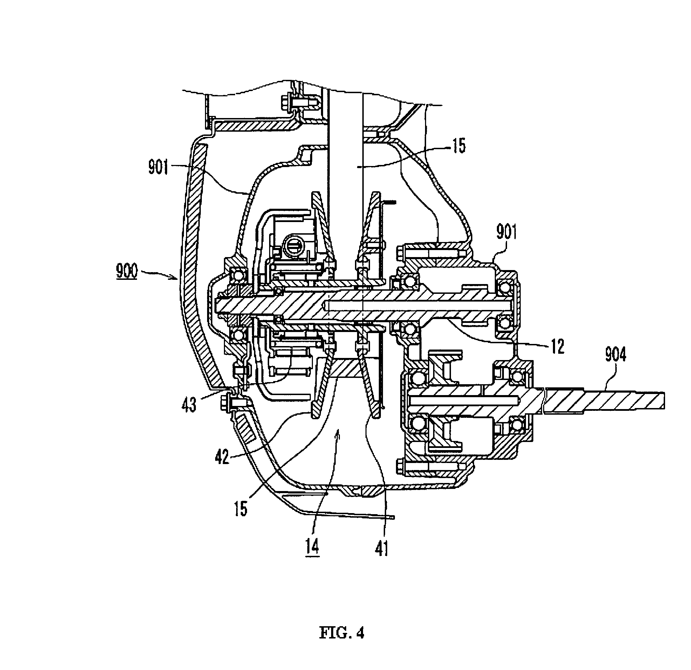

As shown in FIGs. 3 and 4, the primary shaft 11 and the secondary shaft 12 are mounted to a case 901 of the power unit 900 via bearings. The primary shaft 11 is formed integrally with a crankshaft 903 as an output shaft of an engine 902. The secondary shaft 12 is disposed in parallel to the primary shaft 11 and coupled to a drive shaft 904. To the crankshaft 903 are coupled various members including a crank journal 905, a crank web 906, a crank pin 907, a connecting rod 908, and a piston 909.

In this embodiment, the primary sheave 13 and the secondary sheave 14 each include a fixed flange 31, 41 and a movable flange 32, 42 respectively mounted on a rotary shaft (the primary shaft 11 and the secondary shaft 12). The movable flange 42 of the secondary sheave 14 is urged in the direction of reducing the groove width of the secondary sheave 14. Movement of the movable flange 32 of the primary sheave 13 is controlled by the control device 18. Each fixed flange 31, 41 and movable flange 32, 42 define a respective V-groove for receiving a belt therebetween. The V-belt 15 is wound through the V-grooves of the primary sheave 13 and the secondary sheave 14 to transmit the rotational driving force between both the sheaves 13, 14. Movement of the movable flanges 32, 42 in the axial direction of the primary shaft 11 and the secondary shaft 12, respectively, varies the groove width of the V-grooves, which varies the gear ratio of the belt type continuously variable transmission 800.

The groove width adjustment mechanism 16 moves the movable flange 32 of the primary sheave 13 to adjust the groove width of the primary sheave 13. The actuator 17 drives the groove width adjustment mechanism 16. In this embodiment, the groove width of the primary sheave 13 is adjusted by moving the movable flange 32 of the primary sheave 13 with the actuator 17.

The primary sheave 13 and the groove width adjustment mechanism 16 are both mounted on the primary shaft 11. A spline 51 is formed on the primary shaft 11, and male threads 52 for attachment of a locknut 74 to be described later are formed at an end of the primary shaft 11.

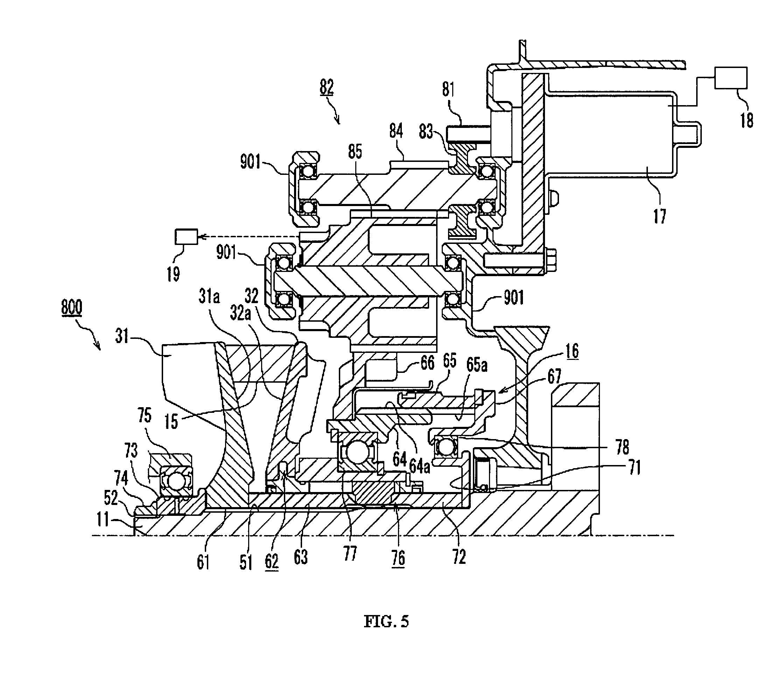

As shown in FIG. 5 as enlarged in scale, the primary sheave 13 is made up of the fixed flange 31 and the movable flange 32. The fixed flange 31 is fixed on the distal end side, and the movable flange 32 is disposed on the base end side so as to be axially movable relative to the primary shaft 11. In this embodiment, the fixed flange 31 and the movable flange 32 of the primary sheave 13 are each a generally disk-shaped member, and respectively have circular conical surfaces 31a, 32a facing each other in the axial direction. The respective circular conical surfaces 31a, 32a of the fixed flange 31 and the movable flange 32 define a V-groove for receiving the V-belt 15 therebetween.

An insertion hole 61 for receiving the primary shaft 11 therethrough is formed at the center of the fixed flange 31, and a spline for engagement with the spline 51 of the primary shaft 11 is formed on the inner peripheral surface of the insertion hole 61. A mount part 62 for attachment to the groove width adjustment mechanism 16 is formed at the center of the movable flange 32. In this embodiment, the groove width adjustment mechanism 16 is made up of a slider 63, a feed member 64, a guide member 65, a gear 66 and a fixed support member 67. The primary sheave 13 and the groove width adjustment mechanism 16 are mounted on the primary shaft 11 by a rotary support member 71, a first sleeve 72, a second sleeve 73 and a locknut 74.

The rotary support member 71, the first sleeve 72, the fixed flange 31, the second sleeve 73 and the locknut 74 are sequentially mounted on the primary shaft 11. The first sleeve 72 and the fixed flange 31 are both meshed with the spline 51 of the primary shaft 11 to rotate together with the primary shaft 11. The second sleeve 73 is mounted on the primary shaft 11 with an end in abutment with the fixed flange 31. The locknut 74 is screwed on the male threads 52 formed at an end of the primary shaft 52. The end of the primary shaft 11 is rotatably supported by a bearing 75 mounted between the second sleeve 73 and the case 901.

The first sleeve 72 includes a guide mechanism 76 disposed along the axial direction. The slider 63 of the groove width adjustment mechanism 16 is mounted to the first sleeve 72 so as to be movable along the axial direction by means of the guide mechanism 76. The movable flange 32 is mounted to the slider 63. The feed member 64 and the gear 66 are mounted to the slider 63 via a bearing 77. Male threads 64a are formed on the outer peripheral surface of the feed member 64, and are meshed with female threads 65a formed on the inner peripheral surface of the guide member 65 fixed to the case 901.

The guide member 65 of the groove width adjustment mechanism 16 is mounted via a bearing 78 to the rotary support member 71 mounted on the primary shaft 11, and mounted to the fixed support member 67 fixed to the case 901. Thus, the guide member 65 is fixed to the case 901 so as not to rotate as the primary shaft 11 rotates.

In this embodiment, an electric motor is used as the actuator 17. An output shaft 81 of the electric motor 17 transmits power to the gear 66 via a plurality of gears 83 to 85 of a gear transmission mechanism 82. The plurality of gears 83 to 85 of the gear transmission mechanism 82 are mounted to the case 901 of the power unit 900 via bearings. The gear transmission mechanism 82 reduces the output rotational velocity of the electric motor 17, and transmits the power to the gear 66 of the groove width adjustment mechanism 16.

In this embodiment, as shown in FIG. 2, the output of the electric motor 17 is controlled by electricity supplied to the electric motor 17 based on a control signal of the control device 18. The electricity supplied to the electric motor 17 is preferably controlled in a PWM (Pulse Width Modulation) method, for example. In the PWM method, the output of the electric motor 17 is controlled by varying the ON/OFF time ratio (duty ratio) of the electric motor 17 with the voltage of the supplied electricity kept constant. Although the output of the electric motor 17 is controlled in the PWM method in this embodiment, the output of the electric motor 17 may be controlled otherwise as long as it can be controlled suitably. For example, the output of the electric motor 17 may be controlled by varying the voltage of the supplied electricity in an analog fashion.

The electric motor 17 is electrically connected to the control device 18 (gearshift control device). The control device 18 is constituted of an electronic control unit (ECU). The electronic control unit (ECU) includes a calculation section (microcomputer (MPU)) and a storage section (memory), for example. The control device 18 receives various vehicle information from various sensors mounted on the vehicle.

The movable flange 32 moves in the axial direction together with the slider 63 as the electric motor 17 rotates with the feed member 64 and the guide member 65 meshed with each other. The position of the movable flange 32 is detected by the flange position detection sensor 19.

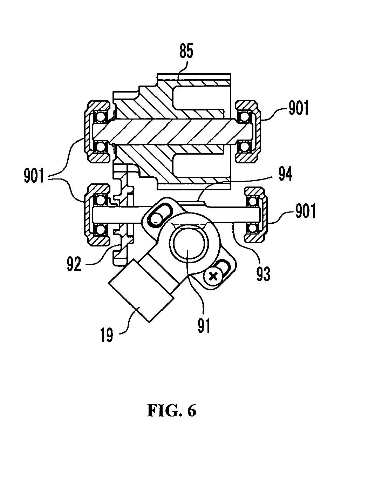

In this embodiment, as shown in FIG. 6, the flange position detection sensor 19 is constituted of a potentiometer 19 (angle sensor) mounted on a rotary shaft for rotation in conjunction with the mechanism for moving the flange (groove width adjustment mechanism 16). A rotary shaft 91 of the potentiometer 19 is meshed with a worm 94 formed on a gear shaft 93 of a gear 92 for meshing engagement with the gear 85 of the gear transmission mechanism 82. The potentiometer 19 is mounted to the case 901 of the power unit 900. The resistance value of the thus constructed potentiometer 19 is varied according to the operation amount of the electric motor 17. There is correlation among the detection value of the potentiometer 19, the operation amount of the electric motor 17, the position of the movable flange 32, and the gear ratio of the belt type continuously variable transmission 800. Therefore, the potentiometer 19 can detect not only the operation amount of the electric motor 17, but also the position of the movable flange 32 of the primary sheave 13 and the gear ratio of the belt type continuously variable transmission 800.

In this embodiment, the groove width adjustment mechanism 16 includes a stopper (not shown) for restricting movement of the movable flange 32 on a side of the movable range of the movable flange 32 where the groove width of the primary sheave 13 is larger (LOW). The potentiometer 19 is mounted to the gear transmission mechanism 82 with the movable flange 32 moved to the side where the gear ratio of the belt type continuously variable transmission 800 is LOW and in abutment with the stopper (not shown). In this embodiment, movement of the movable flange 32 is restricted by the stopper on the side where the gear ratio of the belt type continuously variable transmission 800 is LOW. In this state, the potentiometer 19 is mounted to the gear transmission mechanism 82 and sensor calibration is performed. Therefore, the detection value of the potentiometer 19 is generally constant in the state where the gear ratio of the belt type continuously variable transmission 800 is LOW.

The control device 18 calculates an operation amount of the electric motor 17. Specifically, the control device 18 calculates a target gear ratio of the belt type continuously variable transmission 800 as a control target according to a preset program based on the received vehicle information. The control device 18 then calculates an operation amount of the electric motor 17 based on the correlation between the detection value of the flange position detection sensor 19 and the gear ratio, the correlation between the detection value of the flange position detection sensor 19 and the operation amount of the electric motor 17, or the like, such that the gear ratio of the belt type continuously variable transmission 800 will become the target gear ratio. The control device 18 then outputs an operation signal to the electric motor 17 based on the calculated operation amount of the electric motor 17. The control device 18 in this embodiment will be described in detail below.

In this embodiment, as shown in FIG. 2, the control device 18 includes a target gear ratio setting section 201, a first storage section 202, a second storage section 203, an actual gear ratio detection section 204, an operation amount setting section 205, a determination section 206 and a first correction section 207.

In addition, as shown in FIG. 2, various sensors such as a throttle position sensor (TPS) 101, an engine speed sensor 102 and vehicle speed sensors 103, 104 are electrically connected to the control device 18, aside from the flange position detection sensor 19 described above, so that information on various states of the straddle type vehicle can be obtained from the various sensors.

The throttle position sensor (TPS) 101 senses the accelerator opening degree (throttle opening degree). The engine speed sensor 102 senses the engine speed, and in this embodiment is constituted of a sensor for sensing the speed of the crankshaft (primary shaft 11). The vehicle speed sensors 103, 104 detect the vehicle speed. The vehicle speed sensor is preferably constituted of a sensor 103 for sensing the speed of the secondary shaft 12, or a sensor 104 for sensing the speed of the drive shaft 904, for example.

The target gear ratio setting section 201 sets a target gear ratio. In this embodiment, the control device 18 stores a gear ratio map 211 defining what gear ratio the belt type continuously variable transmission 800 is set to based on vehicle information such as vehicle speed and throttle opening degree, for example. The target gear ratio is preferably set by calculating a gear ratio as a control target from the gear ratio map 211 based on the vehicle information received by the control device 18.

In this embodiment, the gear ratio map 211 as shown in FIG. 7 is set. FIG. 7 shows a gear ratio map set in the control device, with the horizontal axis and the vertical axis representing the vehicle speed and the engine speed, respectively. In FIG. 7, a predetermined gear ratio of the belt type continuously variable transmission 800 for LOW is indicated by r, and a predetermined gear ratio of the belt type continuously variable transmission 800 for TOP is indicated by s. In the gear ratio map 211, a target gear ratio t for acceleration at full throttle and a target gear ratio u for deceleration at fully closed throttle are set.

In this embodiment, the target gear ratio setting section 201 first determines a position on the horizontal axis of FIG. 7 based on the vehicle speed information. The target gear ratio setting section 201 then obtains a control target value of the speed of an engine 902, which should be between the target gear ratio u for deceleration at fully closed throttle and the target gear ratio t for acceleration at full throttle, by multiplication by a predetermined coefficient in accordance with the throttle (accelerator) opening degree. In this case, the target gear ratio is set to a gear ratio closer to the target gear ratio u for deceleration at fully closed throttle as the throttle opening degree is smaller, and to a gear ratio closer to the target gear ratio t for acceleration at full throttle as the throttle opening degree is larger.

In this embodiment, the first storage section 202 stores reference correlation v between the detection value of the potentiometer 19 (flange position detection sensor) and the gear ratio, as shown in FIG. 8. FIG. 8 shows the correlation between the detection value of the potentiometer 19 and the gear ratio, which are represented by the vertical axis and the horizontal axis, respectively, in the movable range of the movable flange 32. In this embodiment, the first storage section 202 stores reference correlation v between the detection value of the potentiometer 19 and the gear ratio. The reference correlation v may be, for example, correlation determined in design or correlation determined based on the average value of measurements using several actual transmissions.

In this embodiment, as described above, the detection value of the potentiometer 19 is generally constant with the gear ratio of the belt type continuously variable transmission 800 being LOW, as shown in FIG. 8. In order to deal with variations in the gear ratio, the reference correlation v between the detection value of the potentiometer 19 (flange position detection sensor) and the gear ratio is set in consideration of the average output characteristics of several potentiometers 19.

In this embodiment, the sensor reference position x is defined as the detection value of the potentiometer 19 with the gear ratio of the belt type continuously variable transmission 800 being LOW. In the reference correlation v, the detection value of the potentiometer 19 becomes larger as the movable flange 32 is moved toward the position where the gear ratio of the belt type continuously variable transmission 800 is TOP.

In this embodiment, there is correlation among the detection value of the potentiometer 19, the gear ratio, the operation amount of the electric motor 17, and the position of the movable flange 32. Therefore, it is possible to substantially interchange the correlation between the detection value of the potentiometer 19 (flange position detection sensor) and the gear ratio, the correlation between the detection value of the potentiometer 19 and the operation amount of the electric motor 17, and the correlation between the detection value of the potentiometer 19 and the position of the movable flange 32. In this embodiment, the position of the movable flange 32 to be achieved by the control device 18 is obtained based on the detection value of the potentiometer 19. That is, the control device 18 recognizes the position of the movable flange 32 based on the detection value of the potentiometer 19.

The second storage section 203 stores a predetermined gear ratio for TOP or LOW. The predetermined gear ratio for TOP or LOW is preferably determined in advance for the benefit of the design of the belt type continuously variable transmission 800. In this embodiment, the second storage section 203 stores a predetermined gear ratio for TOP.

The actual gear ratio detection section 204 detects an actual gear ratio of the belt type continuously variable transmission 800. Here, the term "actual gear ratio" refers to the actual gear ratio of the belt type continuously variable transmission 800, which can be obtained as, for example, the ratio between the rotational speed input to the belt type continuously variable transmission 800 and the rotational speed output therefrom. In this embodiment, the actual gear ratio detection section 204 calculates the actual gear ratio of the belt type continuously variable transmission 800 based on the ratio between the input speed to the belt type continuously variable transmission 800 and the output speed from the belt type continuously variable transmission 800.

The input speed is preferably sensed by, for example, a sensor for directly sensing the speed of the primary shaft 11, or a sensor for indirectly sensing the speed of the primary shaft 11 such as a sensor for sensing the engine speed and a sensor for sensing the speed of the primary sheave 13. In this embodiment, the engine speed sensor 102 is used to sense the input speed. The output speed is preferably sensed by, for example, a sensor for directly sensing the speed of the secondary shaft 12, or a sensor for indirectly sensing the speed of the primary shaft 12 such as a sensor for sensing the speed of the drive shaft 904 and a sensor for sensing the speed of the secondary sheave 14.

The operation amount setting section 205 sets an operation amount of the electric motor 17, such that the gear ratio of the belt type continuously variable transmission 800 will become the target gear ratio, based on information including the correlation stored in the first storage section 202. In this embodiment, the target gear ratio is set by the target gear ratio setting section 201. Then, the detection value of the potentiometer 19 in accordance with the target gear ratio is calculated based on the correlation between the detection value of the potentiometer 19 and the gear ratio stored in the first storage section 202 such that the gear ratio of the belt type continuously variable transmission 800 will become the target gear ratio. Then, the operation amount of the electric motor 17 is determined based on the calculated detection value of the potentiometer 19. It should be understood that the operation amount of the actuator may be set otherwise.

The control device 18 outputs an operation signal to the electric motor 17 based on the operation amount of the electric motor 17 set by the operation amount setting section 205. Here, in the case where the output characteristics of the potentiometer 19 for gear ratios have such correlation as shown in FIG. 8, the gear ratio of the belt type continuously variable transmission 800 is controlled to the target gear ratio.

In this control, in the case where there are individual differences in the output characteristics of the potentiometer 19, the gear ratio of the belt type continuously variable transmission 800 may deviate from the target gear ratio. In addition, the gear ratio of the belt type continuously variable transmission 800 may possibly deviate from the target gear ratio because of changes over years such as wear of the belt, allowable component tolerances, and so forth. One cause of such deviation is considered to be the deviation of the actual correlation between the detection value of the potentiometer 19 and the gear ratio from the reference correlation v between the detection value of the potentiometer 19 and the gear ratio stored in advance in the control device 18.

In this embodiment, a stopper (not shown) for restricting movement of the movable flange 32 is provided on a side of the movable range of the movable flange 32 where the groove width of the primary sheave 13 is larger (LOW), and the potentiometer 19 is mounted with the movable flange 32 in abutment with the stopper (not shown), to set the sensor reference position x. In this case, as shown in FIG. 8, the actual correlation w1, w2 is not significantly deviated from the reference correlation v at a position close to the sensor reference position x. However, as the movable flange 32 is moved toward the side where the groove width of the primary sheave 13 is smaller (TOP side), the distance from the sensor reference position x of the potentiometer 19 increases so that the actual correlation w1, w2 may deviate from the reference correlation v.

Thus, in this embodiment, the correlation between the detection value of the potentiometer 19 and the gear ratio varies among vehicles, especially on the TOP side. The detection value of the potentiometer 19 is under the influence of not only the output characteristics of the potentiometer 19 but also changes over years such as wear of the V-belt 15, component tolerances, and so forth. Such influence is larger on the TOP side.

In the control device 18 of this embodiment, the target gear ratio setting section 201 sets the target gear ratio. Then, the detection value of the potentiometer 19 in accordance with the target gear ratio is derived from the reference correlation v shown in FIG. 8. Then, the operation amount setting section 205 sets the operation amount of the electric motor 17 based on the detection value of the potentiometer 19.

Now, a description is made of the case where the actual correlation w1 is deviated from the reference correlation v such that the detection value of the potentiometer 19 is larger for a gear ratio.

In this case, the control device 18 sets a target gear ratio g, and calculates a detection value h of the potentiometer 19 in accordance with the target gear ratio g based on the reference correlation v. Then, the control device 18 actually calculates an operation amount of the electric motor 17 based on the detection value h of the potentiometer 19 to operate the electric motor 17. Therefore, a gear ratio g1 of the belt type continuously variable transmission 800 to be achieved by the control is deviated from the target gear ratio g to the LOW side by an amount of the deviation of the actual correlation w1 to the LOW side, as indicated by y1.

During acceleration at full throttle, as shown in FIG. 7, the actual gear ratio w1 is deviated to the LOW side from the set target gear ratio t. Therefore, there occurs a problem that the actual gear ratio w1 does not become the predetermined gear ratio s for TOP even at a control completion timing k1.

A description will now be made of the case where the actual correlation w2 is deviated from the reference correlation v such that the detection value of the potentiometer 19 is smaller for a gear ratio, as shown in FIG. 8.

In this case, a gear ratio g2 of the belt type continuously variable transmission 800 to be achieved by the control performed by the control device 18 is deviated from the target gear ratio g to the TOP side by an amount of the deviation of the actual correlation w2 to the TOP side, as indicated by y2. On the gear ratio map 211, as shown in FIG. 7, the actual gear ratio w2 is deviated to the LOW side from the set target gear ratio t. Therefore, there occurs a problem that the actual gear ratio w2 becomes the predetermined gear ratio s for TOP at a timing k2 before the control completion timing k1, and that the actual gear ratio w2 at the control completion timing k1 is smaller than the predetermined gear ratio s for TOP.

As described above, variations in the output of the potentiometer 19 lead to variations in the position of the movable flange 32 for the detection value of the potentiometer 19 among vehicles on the TOP side. As a result, there also occur variations in the gear ratio of the belt type continuously variable transmission 800.

As shown in FIG. 2, the control device 18 includes a determination section 206 and a first correction section 207. The determination section 206 and the first correction section 207 function to improve the control accuracy, in control to move the movable flange 32 to a target position where the gear ratio of the belt type continuously variable transmission 800 would become TOP, by reducing variations in such control. The determination section 206 and the first correction section 207 are described below.

The determination section 206 determines whether or not the actual gear ratio w1, w2 of the belt type continuously variable transmission 800 has become the predetermined gear ratio s for TOP determined in advance. In this embodiment, it is determined whether or not the actual gear ratio w1, w2 detected by the actual gear ratio detection section 204 has become the predetermined gear ratio s for TOP based on the predetermined gear ratio s for TOP stored in the second storage section 203, as shown in FIG. 7.

The determination section 206 can detect an event in which the actual gear ratio w1 does not become the predetermined gear ratio s for TOP even at the control completion timing k1, and an event in which the actual gear ratio w2 becomes the predetermined gear ratio s for TOP before the control completion timing k1. The first correction section 207 corrects the operation amount of the electric motor 17 based on the determination made by the determination section 206.

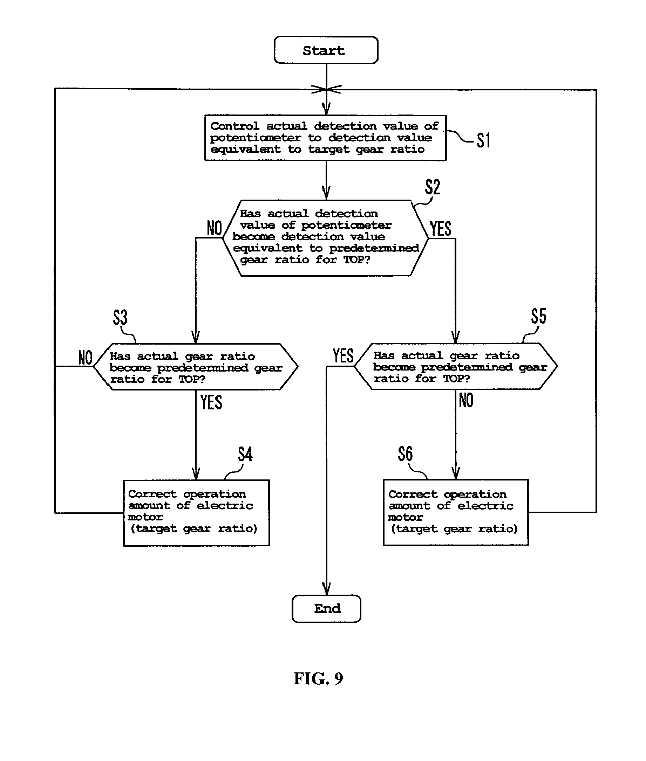

Such control will be described with reference to the flowchart shown in FIG. 9.

The control device 18 controls the electric motor 17 based on the detection value of the potentiometer 19 (S1). That is, in the control device 18 of this embodiment, the target gear ratio setting section 201 sets the target gear ratio. Then, the detection value of the potentiometer 19 in accordance with the target gear ratio (detection value equivalent to the target gear ratio) is derived from the reference correlation v shown in FIG. 8. Then, the operation amount setting section 205 sets the operation amount of the electric motor 17, utilizing feedback of the actual detection value of the potentiometer 19, such that the actual detection value of the potentiometer 19 will become the detection value of the potentiometer 19 (detection value equivalent to the target gear ratio). After the operation amount setting section 205 sets the operation amount of the electric motor 17 in this way, an operation signal in accordance with the operation amount is transmitted to the electric motor 17.

Then, it is determined whether or not the control to bring the gear ratio of the belt type continuously variable transmission 800 to the predetermined gear ratio for TOP has been completed (S2).

In this embodiment, such determination (S2) is made based on the detection value of the potentiometer 19. Here, it is assumed that the movable flange 32 is moved to the target position where the gear ratio of the belt type continuously variable transmission 800 would become TOP. Therefore, the target gear ratio as a control target is the predetermined gear ratio s for TOP. Thus, a detection value h1 of the potentiometer 19 is calculated based on the predetermined gear ratio s for TOP and the reference correlation v, as shown in FIG. 8. Preferably, it is determined that the control has been completed when the actual detection value of the potentiometer 19 has become the detection value h1 equivalent to the predetermined gear ratio s for TOP.

Then, in the case where it is determined in S2 that the control has not been completed (NO), the determination section 206 determines whether or not the actual gear ratio of the belt type continuously variable transmission 800 has become the predetermined gear ratio for TOP determined in advance (S3). In this embodiment, preferably, the actual gear ratio w1, w2 of the belt type continuously variable transmission 800 is calculated to determine whether or not the actual gear ratio w1, w2 has become the predetermined gear ratio s for TOP, as shown in FIG. 7.

In the case where it is determined in S3 that the actual gear ratio has not become the predetermined gear ratio for TOP (NO), the control of S1 is preferably continued.

In the case where the actual gear ratio (detection value of the potentiometer 19) is deviated to the TOP side, as indicated by w2 in FIGs. 7 and 8, and the actual gear ratio w2 has become the predetermined gear ratio s for TOP at the timing k2 before the control completion timing k1, it is determined in S3 that the actual gear ratio has become the predetermined gear ratio for TOP. In the case where such determination is made (YES), the first correction section 207 corrects the operation amount of the electric motor 17 set by the control device 18 such that the gear ratio will not become any smaller (S4).

In this embodiment, the operation amount of the electric motor 17 (target gear ratio) set by the operation amount setting section 205 is corrected so as to keep the operation amount of the electric motor 17 at the timing k2 when it is determined in S3 that the actual gear ratio w2 has become the predetermined gear ratio s for TOP, as shown in FIG. 7 by the broken line C. For example, it is preferable to store the operation amount of the electric motor 17 at the time when it is determined that the actual gear ratio has become the predetermined gear ratio for TOP stored in the second storage section 203, and to correct the operation amount of the electric motor 17 set by the control device 18 such that the movable flange 32 of the primary sheave 13 is kept at a position corresponding to the stored operation amount.

The first correction section 207 may perform correction in any way as long as the operation amount of the electric motor 17 (actuator) set by the control device 18 is substantially corrected. For example, the target gear ratio set by the target gear ratio setting section 201 may alternatively be corrected, unlike the embodiment described above. In addition, in the case where the control device 18 sets the position of the movable flange 32 as a control target, the position of the control target to be set for the movable flange 32 may be corrected.

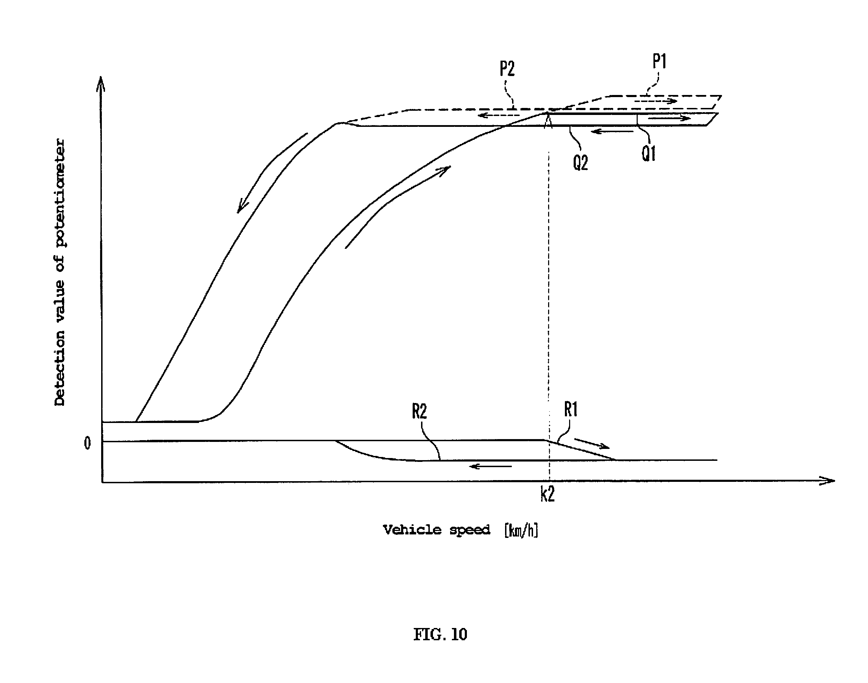

FIG. 10 shows the operation amount and the correction amount of the electric motor 17 in terms of the detection value of the potentiometer 19 for the case where the actual detection value of the potentiometer 19 is deviated from the reference correlation v to the TOP side as described above. In FIG. 10, the vertical axis and the horizontal axis represent the detection vlaue of the potentiometer 19 and the vehicle speed, respectively. The broken lines P1, P2 indicate the actual detection value of the potentiometer 19 that would be detected during control without correction by the first correction section 207. P1 represents acceleration at full throttle, and P2 represents deceleration at fully closed throttle. In this embodiment, a lower value is detected for the same gear ratio during deceleration at fully closed throttle (P2) than during acceleration at full throttle (P1). The solid lines Q1, Q2 indicate the actual detection value of the potentiometer 19 detected with correction by the first correction section 207. Q1 represents acceleration at full throttle, and Q2 represents deceleration at fully closed throttle. R1, R2 indicates the correction amount for Q1, Q2, respectively.

In this embodiment, as shown in FIGs. 7 and 10, the correction is started at the timing k2 when it is determined that the actual gear ratio has become the predetermined gear ratio s for TOP, to set the correction amount R1 so as to keep the position of the movable flange 32 at the timing k2. Then, the correction amount R1 is added to the operation amount P1 of the electric motor 17 without correction to set the operation amount Q1 of the electric motor 17 with correction. As a result, the gear ratio is made closer to the predetermined gear ratio s for TOP, as indicated by the broken line C of FIG. 7. Such correction is maintained at and after the timing k2 when it is determined that the actual gear ratio has become the predetermined gear ratio s for TOP.

In this embodiment, during subsequent deceleration at fully closed throttle, the correction is maintained until the operation amount P2 of the electric motor 17 without correction would become smaller than the operation amount Q2 of the electric motor 17 with correction, as shown in FIG. 10. This allows the gear ratio to vary smoothly.

A description will now be made of the case where it is determined in S2 that the control has been completed (YES).

In the case where it is determined in S2 that the control has been completed (YES), the determination section 206 determines whether or not the actual gear ratio of the belt type continuously variable transmission 800 has become the predetermined gear ratio s for TOP determined in advance (S5) .

In the case where it is determined in FIG. 5 that the actual gear ratio has become the predetermined gear ratio for TOP (YES), the control has been performed generally normally with little deviation of the potentiometer 19, and preferably the control is terminated without performing the correction process.

In the case where the actual gear ratio (detection value of the potentiometer 19) is deviated to the LOW side, as indicated by w1 in FIGs. 7 and 8, and the actual gear ratio w1 has not become the predetermined gear ratio s for TOP even at the control completion timing k1, it is determined in S5 that the actual gear ratio has not become the predetermined gear ratio for TOP. In the case where such determination is made (NO), the first correction section 207 corrects the operation amount of the electric motor 17 set by the control device 18 such that the actual gear ratio will become the predetermined gear ratio s for TOP (S6).

In this embodiment, the first correction section 207 corrects the operation amount of the electric motor 17 set by the control device 18 such that the actual gear ratio will become smaller according to an amount of increase of the vehicle speed, as shown in FIG. 7 by the broken line D. In this case, preferably, it is determined in advance how much the target gear ratio will be corrected in terms of the detection value of the potentiometer 19 for an increase of the vehicle speed of 1 km/h, for example, in order to determine such a correction amount that will make the actual gear ratio closer to the target gear ratio as the vehicle speed increases.

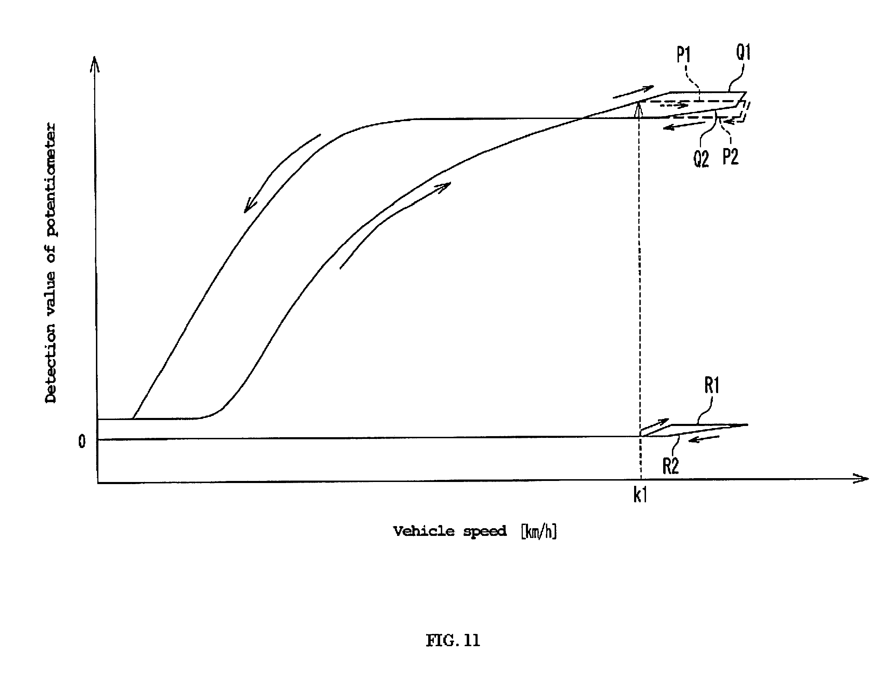

FIG. 11 shows the operation amount and the correction amount of the actuator in terms of the detection value of the potentiometer 19 for the case where the correlation between the actual detection value of the potentiometer 19 and the gear ratio is deviated from the reference correlation v to the LOW side as described above. In FIG. 11, the vertical axis and the horizontal axis represent the detection amount of the potentiometer 19 and the vehicle speed, respectively. The broken lines P1, P2 indicate the detection value of the potentiometer 19 that would be detected during control without correction by the first correction section 207. P1 represents acceleration at full throttle, and P2 represents deceleration at fully closed throttle. In this embodiment, a lower value is detected for the same gear ratio during deceleration at fully closed throttle (P2) than during acceleration at full throttle (P1). The solid lines Q1, Q2 indicate the actual detection value of the potentiometer 19 detected with correction by the first correction section 207. Q1 represents acceleration at full throttle, and Q2 represents deceleration at fully closed throttle. R1, R2 indicates the correction amount for Q1, Q2, respectively.

In this embodiment, as shown in FIGs. 7 and 11, the correction is started after it is determined in S5 that the actual gear ratio has not become the predetermined gear ratio for TOP. Then, the correction amount R1 is set such that the movable flange 32 will move to the TOP side according to an amount of increase of the vehicle speed from the timing k2 when it is determined in S2 that the control has been completed. Then, the correction amount R1 is added to the operation amount P1 of the electric motor 17 without correction to set the operation amount Q1 of the electric motor 17 with correction. As a result, the gear ratio is made closer to the predetermined gear ratio s for TOP, as indicated by the broken line D of FIG. 7. The correction is performed until it is determined that the actual gear ratio has become the predetermined gear ratio s for TOP.

In this embodiment, during subsequent deceleration at fully closed throttle, the correction amount is reduced according to an amount of reduction of the vehicle speed until the correction amount becomes zero, as indicated by R2. This allows the gear ratio to vary smoothly.

As described above, the control device 18 can improve the accuracy of the gear shift on the TOP side, by means of the determination section 206 and the first correction section 207 described above, in the case where the sensor reference position of the potentiometer 19 is set based on the gear ratio on the LOW side.

A description will now be made of an easy method to correct the deviation in the correlation described above over the entire region of the gear ratio.

In this embodiment, the control device 18 includes a second correction section 208 for correcting the reference correlation v between the detection value of the potentiometer 19 and the gear ratio stored in advance in the control device 18 (first storage section 202).

In this embodiment, the sensor reference position of the potentiometer 19 is set on the side where the gear ratio of the belt type continuously variable transmission 800 is LOW. The first storage section 202 stores reference correlation v between the detection value of the potentiometer 19 and the gear ratio. There are individual differences in the output characteristics of the potentiometer 19 among vehicles, and the detection value of the potentiometer 19 may deviate from the reference correlation v to the LOW side (w1) or the TOP side (w2), as shown in FIG. 8.

In this embodiment, the second correction section 208 corrects the reference correlation v based on the proportion of ΔA/ΔB at the position for TOP, ΔA being a change amount of the detection value of the potentiometer 19 at the time when the actual gear ratio (w1, w2) has become a predetermined gear ratio, and ΔB being a change amount of the detection value of the potentiometer 19 derived based on the reference correlation v.

In this way, the actual correlation (w1, w2) is corrected based on the proportion of ΔA/ΔB not only in the TOP region but also over the entire region from LOW to TOP, making it possible to reduce the deviation between the reference correlation v and the actual correlation (w1, w2), and therefore to bring the gear ratio of the belt type continuously variable transmission 800 closer to the target gear ratio. This allows easy correction of the deviation in the correlation described above over the entire region of the gear ratio.

Various ways of correction for control of the gear ratio of the belt type continuously variable transmission in accordance with the present invention have been described above. Such correction may be applied to not only variations between the detection value of the flange position detection sensor and the gear ratio due to the output characteristics of the potentiometer (flange position detection sensor), but also deviation in the correlation due to changes over time in the output characteristics, changes over years such as elongation and wear of the V-belt, component tolerances, and so forth.

Although a belt type continuously variable transmission and a control device therefor in accordance with an embodiment of the present invention have been described above, the belt type continuously variable transmission and the control method therefor in accordance with the present invention are not limited to the embodiment described above.

For example, the construction of the belt type continuously variable transmission 800, the structure of the groove width adjustment mechanism 16, the structure of the flange position detection sensor 19, the configuration of the control device 18, and so forth are not limited to those disclosed in the above embodiment.

In the embodiment described above, the sensor reference position of the potentiometer 19 (flange position detection sensor) is set on the side where the gear ratio of the belt type continuously variable transmission 800 is LOW, by way of example. The sensor reference position of the flange position detection sensor may not necessarily be set on the LOW side but may be set on the TOP side. In the case where the sensor reference position is set on the TOP side, the correlation between the detection value of the flange position detection sensor and the gear ratio may possibly vary among vehicles on the LOW side. In this case, the determination section determines whether or not the actual gear ratio of the belt type continuously variable transmission has become the predetermined gear ratio for LOW determined in advance.

Although the belt type continuously variable transmission 800 is provided to a power unit of a motorcycle by way of example in the above embodiment, the belt type continuously variable transmission 800 may be applied to a wide range of various vehicles other than motorcycles (for example, small vehicles such as straddle type vehicles, scooter type vehicles, golf carts and four-wheeled buggies). Although a belt type continuously variable transmission provided to a power unit is disclosed by way of example, the present invention may be applied to a belt type continuously variable transmission provided separately from an engine.

As described above, the belt type continuously variable transmission and the control method therefor in accordance with the present invention can be widely utilized for belt type continuously variable transmissions provided to vehicles or the like.

### Description of Reference Numerals and Symbols

- 1000:: motorcycle (vehicle)
- 900:: power unit
- 800:: belt type continuously variable transmission
- 11:: primary shaft
- 12:: secondary shaft
- 13:: primary sheave
- 14:: secondary sheave
- 15:: V-belt (belt)
- 16:: groove width adjustment mechanism
- 17:: electric motor (actuator)
- 18:: control device
- 19:: potentiometer (flange position detection sensor)
- 31:: fixed flange
- 32:: movable flange
- 82:: gear transmission mechanism
- 101:: throttle position sensor
- 102:: engine speed sensor
- 103, 104:: vehicle speed sensor
- 201:: target gear ratio setting section
- 202:: first storage section
- 203:: second storage section
- 204:: actual gear ratio detection section
- 205:: operation amount setting section
- 206:: determination section
- 207:: first correction section
- 208:: second correction section
- 211:: gear ratio map
- k1:: control completion timing
- k2:: timing when actual gear ratio has become predetermined gear ratio for TOP
- r:: predetermined gear ratio for LOW
- s:: predetermined gear ratio for TOP
- v:: reference correlation
- w1, w2:: actual correlation
- x:: sensor reference position

## Claims

1. A belt type continuously variable transmission (800) comprising:
a sheave (13) adapted to support a belt (15) and having at least one movable flange (32);
an actuator (17) for moving the movable flange (32); and
a control device (18) for controlling the actuator (17), the control device (18) comprising:
a determination section (206) for determining whether or not an actual gear ratio of the belt type continuously variable transmission (800) has become a predetermined gear ratio for a TOP gear setting or a LOW gear setting determined in advance; and
a first correction section (207) for correcting an operation amount of the actuator (17) based on the determination made by the determination section (206).

2. The belt type continuously variable transmission (800) according to claim 1, wherein:
in a case where the determination section (206) determines that the actual gear ratio has become the predetermined gear ratio for the TOP gear setting before completion of control to move the movable flange (32) to a target position where a gear ratio of the belt type continuously variable transmission (800) would become the TOP gear ratio,
the first correction section (207) corrects the operation amount of the actuator (17) set by the control device (18) such that the actual gear ratio will not become any smaller.

3. The belt type continuously variable transmission (800) according to claim 1 or 2, wherein:
in a case where the determination section (206) does not determine that the actual gear ratio has become the predetermined gear ratio for the TOP gear setting even after completion of control to move the movable flange (32) to a target position where a gear ratio of the belt type continuously variable transmission (800) would become the TOP gear ratio,
the first correction section (207) corrects the operation amount of the actuator (17) set by the control device (18) such that the actual gear ratio will become the predetermined gear ratio for the TOP gear setting.

4. The belt type continuously variable transmission (800) according to claim 3, wherein the first correction section (207) corrects the operation amount of the actuator (17) set by the control device (18) such that the actual gear ratio will become smaller according to an increase of a vehicle speed.

5. The belt type continuously variable transmission (800) according to any preceding claim, comprising:
a flange position detection sensor (19) for detecting a position of the movable flange (32),
the control device (18) comprising:
a target gear ratio setting section (201) for setting a target gear ratio;
a first storage section (202) for storing correlation between a detection value of the flange position detection sensor (19) and the gear ratio; and
an operation amount setting section (205) for setting the operation amount of the actuator (17) based on information including the correlation stored in the first storage section (202) such that the gear ratio of the belt type continuously variable transmission (800) will become the target gear ratio set by the target gear ratio setting section (201).

6. The belt type continuously variable transmission (800) according to claim 5, wherein the control device (18) comprises:
a second storage section (203) for storing the predetermined gear ratio for the TOP or LOW gear settings; and
an actual gear ratio detection section (204) for detecting the actual gear ratio of the belt type continuously variable transmission (800), wherein:
the determination section (206) determines whether or not the actual gear ratio detected by the actual gear ratio detection section (204) has become the predetermined gear ratio for the TOP or LOW gear settings based on the predetermined gear ratio for the TOP or LOW gear settings stored in the second storage section (203); and
the first correction section (207) corrects the operation amount of the actuator (17) set by the operation amount setting section (205) based on the determination made by the determination section (206).

7. The belt type continuously variable transmission (800) according to claim 5 or 6, wherein the flange position detection sensor (19) comprises an angle sensor mounted on a rotary shaft (91) for rotation in conjunction with a mechanism (16) for moving the movable flange (32).

8. The belt type continuously variable transmission (800) according to claim 5, 6 or 7, wherein:
the flange position detection sensor (19) comprises a sensor of which reference is set to a first state where the movable flange (32) is positioned on one side of its movable range, and of which detection value changes according to an amount of movement of the movable flange (32) toward a second state where the flange (32) is positioned on the other side of the movable range;
the first storage section (202) stores reference correlation between the detection value of the flange position detection sensor (19) and the gear ratio; and
the control device (18) comprises a second correction section (208) for correcting the reference correlation stored in the first storage section (202) based on a ratio of ΔA/ΔB in a state closer to the second state, ΔA being a change amount of the detection value of the flange position detection sensor (19) at a time when the actual gear ratio has become a predetermined gear ratio, and ΔB being a change amount of the detection value of the flange position detection sensor (19) derived based on the reference correlation stored in the first storage section (202).

9. The belt type continuously variable transmission (800) according to claim 8, wherein the first state of the flange position detection sensor (19) is achieved when the gear ratio of the belt type continuously variable transmission (800) is in the LOW gear setting.

10. The belt type continuously variable transmission (800) according to claim 8, wherein the first state of the flange position detection sensor (19) is achieved when the gear ratio of the belt type continuously variable transmission (800) is in the TOP gear setting.

11. The belt type continuously variable transmission (800) according to any one of claims 6 to 10, wherein the actual gear ratio detection section (204) calculates the actual gear ratio based on a ratio between an input speed and an output speed of the belt type continuously variable transmission (800).

12. The belt type continuously variable transmission (800) according to any preceding claim, comprising a primary sheave (13) and a secondary sheave (14) each having a pair of flanges (31, 32, 41, 42) axially movable relative to each other, and a belt (15) wound around both sheaves (13, 14).

13. The belt type continuously variable transmission (800) according to claim 12, wherein:
the primary sheave (13) and the secondary sheave (13) each includes a fixed flange (31, 41) and a movable flange (32, 42) respectively mounted on a rotary shaft (11, 12) ; and
a width of a groove of the primary sheave (13) is adjusted by moving the movable flange (32) of the primary sheave (13) with the actuator (17), and the movable flange (42) of the secondary sheave (14) is urged in a direction of reducing a width of a groove of the secondary sheave (14).

14. A belt type continuously variable transmission (800) comprising:
a primary sheave (13) and a secondary sheave (14) each having a pair of flanges (31, 32, 41, 42) axially movable relative to each other, and a belt (15) wound around both the sheaves (13, 14);
an actuator (17) for moving one of the movable flanges (32);
a flange position detection sensor (19) for detecting a position of the flange (32) (, the flange position detection sensor (19) being a sensor of which reference is set to a first state where the pair of flanges (31, 32) of the primary sheave (13) are positioned in one of a TOP state and a LOW state, and of which detection value changes according to an amount of movement of the flanges (31, 32) toward a second state where the flanges (31, 32) are positioned in the other state; and
a control device (18) for controlling the actuator (17), the control device (18) comprising:
a first storage section (202) for storing reference correlation between the detection value of the flange position detection sensor (19) and a gear ratio; and
a second correction section (208) for correcting the reference correlation stored in the first storage section (202) based on a ratio of ΔA/ΔB, ΔA being a change amount of the detection value of the flange position detection sensor (19) at a time when the actual gear ratio has become a predetermined gear ratio in a state closer to the second state, and ΔB being a change amount of the detection value of the flange position detection sensor (19) derived based on the reference correlation stored in the first storage section (202) in a state closer to the second state.

15. A control device (18) provided for a belt type continuously variable transmission (800) having a sheave (13) adapted to support a belt (15) and including at least one movable flange (32), the control device (18) being configured to control an actuator (17) for moving the movable flange (32) and comprising:
a determination section (206) for determining whether or not an actual gear ratio of the belt type continuously variable transmission (800) has become a predetermined gear ratio for a TOP gear setting or a LOW gear setting determined in advance; and
a first correction section (207) for correcting an operation amount of the actuator (17) based on the determination made by the determination section (206).

16. The control device (18) for a belt type continuously variable transmission (800) according to claim 15, wherein:
in a case where the determination section (206) determines that the actual gear ratio has become the predetermined gear ratio for the TOP gear setting before completion of control to move the movable flange (32) to a target position where a gear ratio of the belt type continuously variable transmission (800) would become the TOP gear setting,
the first correction section (207) corrects the operation amount of the actuator (17) set by the control device (18) such that the actual gear ratio will not become any smaller.

17. The control device (18) for a belt type continuously variable transmission (800) according to claim 15 or 16, wherein:
in a case where the determination section (206) does not determine that the actual gear ratio has become the predetermined gear ratio for the TOP gear setting even after completion of control to move the movable flange (32) to a target position where a gear ratio of the belt type continuously variable transmission (800) would become the TOP gear setting,
the first correction section (207) corrects the operation amount of the actuator (17) set by the control device (18) such that the actual gear ratio will become the predetermined gear ratio for TOP.

18. The control device (18) for a belt type continuously variable transmission (800) according to claim 17, wherein the first correction section (207) corrects the operation amount of the actuator (17) set by the control device (18) such that the actual gear ratio will become smaller according to an increase of a vehicle speed.

19. The control device (18) for a belt type continuously variable transmission (800) according to any one of claims 15 to 18, comprising:
a flange position detection sensor (19) for detecting a position of the movable flange (32);
a target gear ratio setting section (201) for setting a target gear ratio;
a first storage section (202) for storing correlation between a detection value of the flange position detection sensor (19) and the gear ratio; and
an operation amount setting section (205) for setting the operation amount of the actuator (17) based on information including the correlation stored in the first storage section (202) such that the gear ratio of the belt type continuously variable transmission (800) will become the target gear ratio set by the target gear ratio setting section (201).

20. The control device (18) for a belt type continuously variable transmission (800) according to claim 19, comprising:
a second storage section (203) for storing the predetermined gear ratio for the TOP or LOW gear settings; and
an actual gear ratio detection section (204) for detecting the actual gear ratio of the belt type continuously variable transmission (800),
wherein:
the determination section (206) determines whether or not the actual gear ratio detected by the actual gear ratio detection section (204) has become the predetermined gear ratio for the TOP or LOW gear settings based on the predetermined gear ratio for the TOP or LOW gear settings stored in the second storage section (203); and
the first correction section (207) corrects the operation amount of the actuator (17) set by the operation amount setting section (205) based on the determination made by the determination section (206).

21. The control device (18) for a belt type continuously variable transmission (800) according to claim 19 or 20, wherein the flange position detection sensor (19) comprises an angle sensor mounted on a rotary shaft (91) for rotation in conjunction with a mechanism (16) for moving the movable flange (32).

22. The control device (18) for a belt type continuously variable transmission (800) according to claim 19, 20 or 21, wherein:
the flange position detection sensor (19) comprises a sensor of which reference is set to a first state where the movable flange (32) is positioned on one side of its movable range, and of which detection value changes according to an amount of movement of the movable flange (32) toward a second state where the flange (32) is positioned on the other side of the movable range;
the first storage section (202) stores reference correlation between the detection value of the flange position detection sensor (19) and the gear ratio; and
the control device (18) comprises a second correction section (208) for correcting the reference correlation stored in the first storage section (202) based on a ratio of ΔA/ΔB in a state closer to the second state, ΔA being a change amount of the detection value of the flange position detection sensor (19) at a time when the actual gear ratio has become a predetermined gear ratio, and ΔB being a change amount of the detection value of the flange position detection sensor (19) derived based on the reference correlation stored in the first storage section (202).

23. The control device (18) for a belt type continuously variable transmission (800) according to claim 22, wherein the first state of the flange position detection sensor (19) is achieved when the gear ratio of the belt type continuously variable transmission (800) is in the LOW gear setting.

24. The control device (18) for a belt type continuously variable transmission (800) according to claim 22, wherein the first state of the flange position detection sensor (19) is achieved when the gear ratio of the belt type continuously variable transmission (800) is in the TOP gear setting.

25. The control device (18) for a belt type continuously variable transmission (800) according to any one of claims 20 to 24, wherein the actual gear ratio detection section (204) calculates the actual gear ratio of the belt type continuously variable transmission (800) based on a ratio between an input speed and an output of the belt type continuously variable transmission (800).

26. The control device (18) for a belt type continuously variable transmission (800) according to any one of claims 15 to 25, wherein the belt type contunuously variable transmission (800) comprises a primary sheave (13) and a secondary sheave (14) each having a pair of flanges (31, 32, 41, 42) axially movable relative to each other, and a belt (15) wound around both sheaves (13, 14).

27. The control device (18) for a belt type continuously variable transmission (800) according to claim 26, wherein:
the primary sheave (13) and the secondary sheave (14) each includes a fixed flange (31, 41) and a movable flange (32, 42) respectively mounted on a rotary shaft (11, 12) ; and
a width of a groove of the primary sheave (13) is adjusted by moving the movable flange (32) of the primary sheave (13) with the actuator (17), and the movable flange (42) of the secondary sheave (14) is urged in a direction of reducing a width of a groove of the secondary sheave (14).

28. A control device (18) provided for a belt type continuously variable transmission (800) having a primary sheave (13) and a secondary sheave (14) each having a pair of flanges (31, 32, 41, 42) axially movable relative to each other, and a belt 915) wound around both the sheaves (13, 14), the control device (18) being configured to control an actuator (17) for moving a movable flange (32) and comprising:
a flange position detection sensor (19) for detecting a position of the movable flange (32), of which reference is set to a first state where the pair of flanges (31, 32) of the primary sheave (13) are positioned in one of a TOP state and a LOW state, and of which detection value changes according to an amount of movement of the flanges (31, 32) toward a second state where the flanges (31, 32) are positioned in the other state;
a first storage section (202) for storing reference correlation between the detection value of the flange position detection sensor (19) and a gear ratio; and
a second correction section (208) for correcting the reference correlation stored in the first storage section (202) based on a ratio of ΔA/ΔB, ΔA being a change amount of the detection value of the flange position detection sensor (19) at a time when the actual gear ratio has become a predetermined gear ratio in a state closer to the second state, and ΔB being a change amount of the detection value of the flange position detection sensor (19) derived based on the reference correlation stored in the first storage section (202) in a state closer to the second state.

29. A vehicle (1000) comprising a belt type continuously variable transmission (800) according to any one of claims 1 to 14 or a control device (18) according to any one of claim 115 to 28.

30. The vehicle (1000) according to claim 29, comprising any one of a motorcycle, a straddle type vehicle, a scooter type vehicle, a golf cart or a four-wheeled buggy.
